# EUROPÄISCHE PATENTSCHRIFT

(11) **EP 2 881 688 B1**
(45) Veröffentlichungstag und Bekanntmachung des Hinweises auf die Patenterteilung: **10.03.2021**
(21) Anmeldenummer: 14196184.7
(22) Anmeldetag: 04.12.2014
(51) Int. Cl.: F25D 23/02, A21B 3/02, F25D 23/08

(54) **Vakuumkühlvorrichtung mit einer Schiebetür**
Vacuum cooling device with a sliding door
Dispositif de refroidissement sous vide avec porte coulissante

(30) Priorität: 05.12.2013 EP 13195852
(43) Veröffentlichungstag der Anmeldung: 10.06.2015
(73) Patentinhaber: Glavatec AG, 8753 Mollis (CH)
(72) Erfinder: Giger, Ulrich, 8608 Bubikon (CH); Bäbler, Florian, 8753 Mollis (CH); Bäbler, Kaspar, 8753 Mollis (CH)
(74) Vertreter: Herrmann, Johanna

(56) Entgegenhaltungen:
- AU-B2- 629 715
- CN-U- 203 145 682
- DE-C- 582 339
- FR-A1- 2 642 107
- US-A- 2 878 532

## Beschreibung

Die Erfindung betrifft eine Tür für eine Vakuumkühlvorrichtung für Lebensmittel, insbesondere Backwaren. Die Erfindung betrifft insbesondere eine Vakuumkühlvorrichtung, welche durch eine Schiebetür verschliessbar ist. Eine Vakuumkühlvorrichtung zum Kühlen von Lebensmitteln, insbesondere Backwaren, beispielsweise frisch gebackenem Brot unter einem negativen Druck umfasst eine Vakuumkammer, die zur Aufnahme des frischen Backguts für dessen Kühlung ausgebildet ist.

Heisse und feuchte Lebensmittel können durch Evakuieren in einer Vakuumkammer sehr effizient abgekühlt werden, das heisst, es ist nur eine kurze Abkühlungszeit erforderlich.

Im Stand der Technik werden üblicherweise Schwenktüren vorgesehen, um den Zugang zur Vakuumkammer beispielsweise zur Be- oder Entladung von Backgut freizugeben sowie die Vakuumkammer im Betriebszustand fluiddicht zu verschliessen. Derartige Schwenktüren sind üblicherweise mittels Scharnieren an der Wand der Vakuumkühlvorrichtung befestigt und werden händisch geöffnet oder geschlossen. Ein Beispiel für eine derartige um ein Scharnier um eine vertikale Achse drehbeweglich angeordnete Tür ist in der JP 11264641 gezeigt. Eine Türverriegelung kann eingesetzt werden. Die Verwendung einer Schwenktür hat eine ganze Reihe von Nachteilen im Betrieb der Vakuumkühlanlage: Die Türdichtungen der Schwenktüren werden gewalkt, (das heisst auf Druck beansprucht und gequetscht), was bei hohen mechanischen Beanspruchungen zu Schäden am Dichtungsmaterial führen kann. Undichte Türdichtungen führen zu Qualitätseinbussen der Lebensmittel, da die Sollwertdruckkurven der Rezepturen nicht erreicht werden können, da nicht gewährleistet werden kann, dass der in der Rezeptur vorgesehene Unterdruck tatsächlich erreicht wird und für die in der Rezeptur vorgesehene Zeitdauer aufrecht erhalten werden kann.

Die Schwenktüren haben eine Höhe, die allenfalls nur unwesentlich kleiner ist als die Höhe der Vakuumkammer, damit die Vakuumkammer in einem Arbeitsschritt mit sämtlichen Gestellen, welche das Backgut tragen, beschickt werden können. Dementsprechend haben die Schwenktüren ein beträchtliches Gewicht. Zur Durchführung der Schwenkbewegungen benötigen sie sehr viel Platz. Eine Schwenktüre kann eine Breite von bis zu 2.5 m und eine Höhe von bis zu 3 m aufweisen. Daher wird für diese Schwenktür ein Schwenkradius von 2. 5 m bzw. bis zu 3 m benötigt.

Durch ihr Gewicht sind derartige Schwenktüren nicht ungefährlich in der Bedienung. Insbesondere kann eine derartige Schwenktür unerwartet zufallen und einen Mitarbeiter in der Vakuumkammer einschliessen.

Während des Vakuumprozesses kondensiert auf der Innenseite der Schwenktür Dampf, dieses Kondensat läuft beim Öffnen der Schwenktür auf die Be- und Entladerampe ab. Es gelangt auch unter die Vakuumkammer und auf den Boden, auf welchem sich die Vakuumanlage befindet. Dieses Kondensat kann Spuren der Lebensmittel enthalten, sodass der Austritt des Kondensats zu unhygienischen Zuständen führen kann, wenn das Kondensat nicht umgehend in einem Reinigungsschritt entfernt wird. Feuchtigkeit und Backrückstände auf der Be- und Entladerampe erhöhen die Rutschgefahr, sodass die Verletzungsgefahr für Mitarbeiter erhöht ist, welche die Vakuumkammer beladen oder entladen müssen oder sich zu anderen Tätigkeiten in der Vakuumkammer oder innerhalb des Schwenkradius der Schwenktür aufhalten.

Des Weiteren ist aus der CN203145682U eine in horizontaler Richtung verschiebbare Schiebetür für einen Vakuumvorkühler bekannt. Diese Tür weist einen Rahmen, eine Türplatte, zwei Haken, einen Antrieb sowie eine pneumatische Andrückvorrichtung auf. Der Antrieb ist als ein Linearantrieb mit einem Linearmotor ausgebildet, mittels welchem der Rahmen der Tür horizontal von einer geöffneten Stellung zu einer geschlossenen Stellung oder umgekehrt bewegt werden kann. Die Türplatte ist um eine horizontale Achse kippbar, die entlang der unteren Innenkante des Rahmens verläuft. Die Türplatte wird von den Haken, die mit dem Rahmen verbunden sind, in gekippter Stellung gehalten, wenn die Vakuumkammer geschlossen ist. Soll die Vakuumkammer geöffnet werden, wird die untere Kante der Tür in Richtung der Vakuumkammer mittels einer pneumatischen Vorrichtung bewegt, wodurch die Kippbewegung rückgängig gemacht wird, sodass das Türblatt im Wesentlichen in eine vertikale Position zurückgestellt wird. Wenn sich das Türblatt in seiner vertikalen Stellung befindet, kann der Türrahmen samt der Tür mittels des Linearantriebs von der geschlossenen Stellung in die geöffnete Stellung oder umgekehrt bewegt werden. Gemäss der Darstellung liegt das Türblatt aber am Rahmen der Öffnung der Vakuumkammer zumindest teilweise auf. Wenn sich also auf dem Türblatt oder dem Rahmen eine Dichtung befinden sollte, würde diese Dichtung bei jeder Öffnungs- oder Schliessbewegung Scherkräften ausgesetzt. Daher eignet sich die CN203145682U nicht für Vakuumkammern, welche mittels einer Dichtung ausgestattet sind, die auf dem Türblatt oder dem Rahmen der Vakuumkammer verläuft und welche eine Abdichtung der Vakuumkammer zur Erzeugung des Vakuums ermöglicht.

Die WO2010074723 A1 zeigt eine in vertikaler Richtung verschiebbare Schiebetür für einen Gefriertrockner. Die EP1314521 A1 zeigt ebenfalls eine in vertikaler Richtung verschiebbare Schiebetür für einen Trockner für Keramikziegel. In der AU 629 715 B2 ist ein Vakuumkühler mit einer auf Rollen gelagerten und in Schienen geführten Schiebetür gezeigt, die mittels der Rollen von der geschlossenen Stellung in die geöffnete Stellung und umgekehrt bewegbar ist. Die Schiebetür selbst bildet hierbei eine Dichtung aus, sodass sie möglicherweise selbst als Dichtung wirkt, ähnlich wie es in der DE582339 C1 beschrieben ist. Um eine Dichtigkeit im geschlossenen Zustand zu gewährleisten, müssen derartige Schiebetüren sehr präzise gefertigt sein. Daher wurden in der FR 2 642 107 A1 Überlegungen angestellt, eine aufblasbare Dichtung zwischen Türblatt und Türrahmen vorzusehen, um ein Spiel zwischen Türblatt und Türrahmen zulassen zu können. Allerdings wird diese aufblasbare Dichtung beim Öffnung oder Schliessen der Schiebetür Scherkräften ausgesetzt, wodurch es zu einer Walkung der Dichtung kommt, sodass die Dichtung als ein Verschleissteil mit geringer Lebensdauer oft auszuwechseln ist.

Der vorliegenden Erfindung liegt die Aufgabe zugrunde, Vakuumkühlvorrichtung mit einer Tür zu entwickeln, wobei die Türdichtung beim Schliessen und Öffnen keinerlei Walkung ausgesetzt ist. Des Weiteren soll eine Vakuumkühlvorrichtung entwickelt werden, in welcher Gefahrenquellen für Mitarbeiter, welche sich in der Vakuumkühlvorrichtung oder in deren unmittelbaren Umgebung aufhalten, eliminiert oder zumindest verringert werden. Damit eine reproduzierbare Lebensmittelqualität garantiert werden kann, ist eine einwandfrei dichtende Türe Voraussetzung, daher ist es eine Zielsetzung der Erfindung die Lebensdauer der Türdichtung zu verlängern. Der Türmechanismus soll möglichst wenig Platz in Anspruch nehmen und zumindest teilweise automatisiert werden können.

Die Aufgabe wird durch eine Vakuumkühlvorrichtung nach Anspruch 1 gelöst. Weitere vorteilhafte Ausführungsbeispiele sind Gegenstand der Unteransprüche 2 bis 10. Ein Verfahren zur Betätigung einer Schiebetür für eine Vakuumkühlvorrichtung ist Gegenstand der Ansprüche 11, 12 und 13.

Mit zunehmendem Vakuum, also abnehmendem Innendruck in der Vakuumkammer wird die Schiebetür selbsttätig auf die Dichtfläche gepresst. Nach dem Belüften der Vakuumkammer wird die Türe mit oder ohne Federkraft von der Dichtfläche abgehoben. Die Dichtfläche wird daher ausschliesslich auf Druck beansprucht, wenn ein Vakuum anliegt. Hierzu weist die Schiebetür ein Trägerelement auf, wobei das Trägerelement in einer Schiene verschiebbar gelagert ist. Insbesondere können am Trägerelement Rollelemente angebracht sein, welche in der Schiene entlang einer horizontalen Bahn bewegbar sind. Die Schiebetür kann einen Öffnungs- und/oder Schliessmechanismus enthalten. Die Schiebetür kann durch Betätigen des Schliessmechanismus derart bewegt werden, dass die Dichtung auf dem Türflansch aufliegt, sodass eine Dichtwirkung entsteht. Insbesondere liegt die Dichtung auf dem Türflansch überall gleichmässig auf. Somit ist die Dichtung frei von Walkung, das heisst es werden keine Scherkräfte von der Schiebetür auf die Dichtung übertragen, wenn die Dichtung am Türflansch angebracht ist bzw. keine Scherkräfte vom Türflansch auf die Schiebetüre übertragen, wenn die Dichtung an der Schiebetür angebracht ist. Das Trägerelement enthält ein Ausgleichselement. Die Dichtung ist vorzugsweise einfach montierbar und/oder demontierbar, sodass sie ausgewechselt und gereinigt werden kann. Beispielsweise kann die Dichtung zur Reinigung zeitweise in eine Reinigungslösung gelegt werden. Nach Abschluss des Reinigungsschritts kann die Dichtung wieder im Türflansch, auf der Innenseite der Schiebetür oder entlang des Umfangs des Türblatts montiert werden.

Nach einem Ausführungsbeispiel kann die Schiebetür ein Verstärkungselement zur Abstützung von einer einen Türflansch ausbildenden Rahmenkonstruktion enthalten. Hierdurch kann insbesondere gezielt Verformungen der Schiebetür, insbesondere des Türblatts der Schiebetür entgegen gewirkt werden. Die Schiebetür kann somit gleichmässig auf der den Türflansch oder Türrahmen ausbildenden Rahmenkonstruktion aufliegen. Hierdurch wird die Dichtung über ihren gesamten Umfang gleichmässig beansprucht.

Insbesondere kann die Vakuumkühlvorrichtung nach einem der vorhergehenden Ausführungsbeispiele mit einer Schiebetür ausgestattet sein, die ein Türblatt aufweist, welches zumindest entlang der Dichtung am Türflansch aufliegt. Das Türblatt kann eine plattenförmige Oberfläche umfassen, welche die Vakuumkammer fluiddichtend verschliessen kann. Die Dichtung kann ein Ausgleichselement zur Abdichtung von Unebenheiten in Türblatt und/oder Türflansch enthalten. Durch das Ausgleichselement kann eine gleichmässige Auflage der Dichtung auf der zugehörigen Unterlage, das heisst des Türblatts und des Türflanschs erreicht werden.

Unterhalb der gesamten Verschiebedistanz der Schiebetür ist ein Kondensatsammelbehälter angebracht. Das während des Betriebes anfallende Kondensat, in der Regel Kondenswasser, kann beim Öffnen der Türe direkt in den Kondensatsammelbehälter tropfen. Der Kondensatsammelbehälter weist eine gegen die Horizontalebene zumindest geringfügig geneigte Bodenfläche auf, um das Kondensat einfach abfliessen zu lassen. Am tiefsten Punkt der Bodenfläche ist ein Abfluss angeordnet. Der Abfluss wird direkt in die Kanalisation geleitet. Um eine Schiebetür einsetzen zu können, wird die Vakuumkammer mittels Maschinenfüssen angehoben. Dadurch werden die Lebensmittelgebinde automatisiert be- und entladen, was die Personensicherheit stark erhöht.

Der Vorteil der Erfindung besteht darin, dass die Dichtung der Schiebetür eine höhere Lebensdauer aufweist und demzufolge über einen längeren Zeitraum im Einsatz stehen kann. Die Prozessqualität und Reproduzierbarkeit wird erhöht. Der Platzbedarf für die Vakuumkammer inklusive der Schiebetür ist geringer, da kein Schwenkbereich für die Schiebetür vorgesehen werden muss. Das Öffnen und Schliessen der Schiebetüren der Vakuumkammer ist einfach zu automatisieren.

Weil weniger Platz für die Schiebetür benötigt wird, können für eine Vakuumkammer auch zwei gegenüberliegende Schiebetüren eingesetzt werden. Durch die Verwendung von zwei gegenüberliegenden Schiebetüren kann die Vakuumkammer als Schleuse verwendet werden, z.B. zwischen einer Bäckerei und einem Reinraum. Ein derartiger Reinraum kann beispielsweise für die Verpackung der vakuumgekühlten Lebensmittel vorgesehen sein. Der Bäckereibereich enthält Mehl in der Luft, welche den Reinraum nicht erreichen soll.

Nach einem Ausführungsbeispiel können somit eine erste und eine zweite Schiebetür vorgesehen sein. Die erste Schiebetür und die zweite Schiebetür können abwechselnd geschlossen werden, sodass das zu kühlende Backgut nur in einer Richtung durch die Vakuumkammer bewegt werden muss. Die erste und zweite Schiebetür können auch als schleusenartiger Durchgang verwendet werden, um den Produktionsbereich für die Backwaren vom Lagerbereich für die fertigen Backwaren zu trennen.

Durch die Anordnung eines Kondensatsammelbehälters unterhalb der Schiebetür wird sämtliches Kondensat über den Kondensatsammelbehälter abgeführt. Der Kondensatsammelbehälter kann eine Breite aufweisen, die der Verschiebedistanz der Schiebetür entspricht. Daher kann kein Kondensat auf das Fundament oder den Boden der Vakuumkühlvorrichtung gelangen. Somit kann Hygiene während des ganzen Vakuumkühlverfahrens, der Be- und Entladung der Vakuumkammer gewährleistet werden. Die Zugänglichkeit kann für Reinigungszwecke zusätzlich erhöht werden, wenn die Vakuumkammer auf Maschinenfüssen angeordnet ist. Zwischen dem Boden und der Vakuumkammer bleibt ein Freiraum bestehen. Der Boden unterhalb der Vakuumkammer ist zugänglich und kann daher einfach gereinigt werden. Wenn die Vakuumkammer auf Maschinenfüssen angeordnet ist, kann ein automatisiertes Be- und Entladesystem eingesetzt werden.

Eine ein- oder zweitürige Ausführung kann zwei oder mehr Vakuumkammern enthalten, die nebeneinander angeordnet sind. Beispielsweise kann in einer der Vakuumkammern eine Vakuumkühlung laufen, während die andere Vakuumkammer entladen und anschliessend beladen wird. Sobald die Vakuumkühlung abgeschlossen ist, wird deren Schiebetür geöffnet, die nebenstehende Vakuumkammer geschlossen, sodass die Vakuumkühlung unmittelbar anschliessend durchgeführt werden kann. Das heisst die beiden Vakuumkammern werden entweder be- oder entladen oder zur Vakuumkühlung verwendet. Hierdurch kann das vakuumgekühlte Backgut kontinuierlich bereitgestellt werden. Eine der Vakuumkühlvorrichtung nachgeschaltete Verpackungsanlage kann somit kontinuierlich mit Backgut versorgt werden.

Das anfallende Kondensat, welches entlang der Schiebetüre abläuft, tropft in einen Sammelbehälter, der sporadisch automatisch gespült wird. Hierdurch wird eine Quelle von Verunreinigungen beseitigt, welche zur Bildung unerwünschter Keime führen kann. Dies kann zur Folge haben, dass eine hygienische Betriebsweise mit vermindertem Reinigungsaufwand aufrechterhalten werden kann. Die Personensicherheit wird wesentlich erhöht, weil vermieden wird, dass Flüssigkeit auf den Boden gelangt und die Rutschgefahr hierdurch reduziert wird.

Ein Verfahren zur Betätigung einer Schiebetür für eine Vakuumkühlvorrichtung umfasst die Schritte: Betätigen eines Öffnungs- und Schliessmechanismus , wobei durch Betätigen des Öffnungs- und Schliessmechanismus zum Verschliessen einer Vakuumkammer der Vakuumkühlvorrichtung ein Türblatt der Schiebetür gegen einen Türflansch einer Rahmenkonstruktion gedrückt wird, wobei in einem zweiten Schritt eine Dichtung zwischen dem Türblatt und dem Türflansch derart zusammengedrückt wird, dass die Vakuumkammer vakuumdicht verschlossen wird, sodass durch die Dichtung eine langsame Druckabsenkung zur schonenden Vakuumkühlung von Lebensmitteln ermöglicht ist.

Insbesondere kann die Schiebetür von Hand geöffnet werden, wobei die Schiebetür einen Antrieb für ihre Verschiebung aufweist, welcher von der Schiebetür entkoppelt werden kann, um gleichzeitig den Öffnungs- und Schliessmechanismus der Schiebetür zu öffnen.

Nachfolgend werden Ausführungsbeispiele der Erfindung anhand der Zeichnungen erläutert. Darin zeigen:
Fig 1a eine Ansicht einer Vakuumkühlvorrichtung im geschlossenen Zustand,
Fig 1b eine Ansicht einer Vakuumkühlvorrichtung im offenem Zustand,
Fig. 1c eine Ansicht einer Vakuumkühlvorrichtung in einer perspektivischen Darstellung in offenem Zustand,
Fig. 1d eine Ansicht einer Vakuumkühlvorrichtung in einer perspektivischen Darstellung in geschlossenem Zustand,
Fig 2 eine Ansicht einer Vakuumkühlvorrichtung nach einem zweiten Ausführungsbeispiel,
Fig 3a eine Ansicht einer Vakuumkühlvorrichtung nach einem dritten Ausführungsbeispiel im geschlossenen Zustand von oben,
Fig 3b eine Ansicht einer Vakuumkühlvorrichtung nach dem dritten Ausführungsbeispiel im offenem Zustand von oben zur Beladung mit Lebensmitteln,
Fig 3c eine Ansicht einer Vakuumkühlvorrichtung nach dem dritten Ausführungsbeispiel im offenem Zustand von oben zur Entladung von Lebensmitteln,
Fig. 4 ein Detail der Fig. 2,
Fig. 5a ein Detail eines Öffnungs- und Schliessmechanismus im geöffneten Zustand,
Fig. 5b den Öffnungs- und Schliessmechanismus der Fig. 5b in geschlossenem Zustand,
Fig. 5c ein Detail einer Variante eines Öffnungs- und Schliessmechanismus,
Fig. 6 ein Ausführungsbeispiel für ein Ausgleichselement,
Fig. 7a eine erste Variante für eine Türdichtung,
Fig. 7b eine zweite Variante für eine Türdichtung,
Fig. 7c eine dritte Variante für eine Türdichtung,
Fig. 7d eine vierte Variante für eine Türdichtung,
Fig. 7e eine fünfte Variante für eine Türdichtung,
Fig. 7f eine sechste Variante für eine Türdichtung,
Fig. 8 eine Innenansicht einer Schiebetür für eine Vakuumkühlvorrichtung nach einem vierten Ausführungsbeispiel,
Fig. 9 eine Aussenansicht der Schiebetür gemäss Fig. 8,
Fig. 10 ein Detail der Schiebetür gemäss Fig. 8,
Fig. 11 ein weiteres Detail der Schiebetür gemäss Fig. 8.

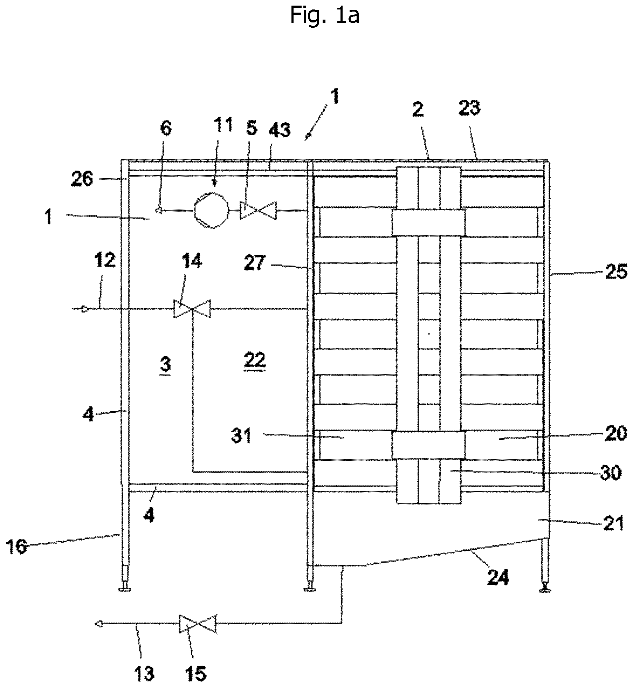

Die in Fig. 1a dargestellte Vakuumkühlvorrichtung 1 umfasst eine Vakuumkammer 2 sowie eine Kammer 3, in welcher eine Vorrichtung zur Erzeugung des Vakuums, wie beispielsweise eine Vakuumpumpe 11, Zu- und Ableitungen von Prozessfluiden 6 sowie Vorrichtungen zur Erzeugung, Umwandlung oder Regeneration von Energie, insbesondere Wärme angeordnet sind. Die Vakuumpumpe 11 ist über die Vakuumleitung 6 mit der Vakuumkammer verbunden, wenn das Ventil 5 geöffnet ist. Zur Evakuierung des Innenraums der Vakuumkammer 2 wird die Vakuumpumpe 11 über einen nicht dargestellten Antriebsmotor betrieben und saugt Gas, insbesondere Luft aus der Vakuumkammer bis ein definierter Unterdruck erreicht ist.

Die Vakuumkammer hat einen Boden 24 sowie eine Decke 23. Zwischen dem Boden 24 und der Decke 23 erstrecken sich eine erste Seitenwand 25 und eine zweite Seitenwand 26. Sämtliche Wände können in einer Rahmenkonstruktion 4 aufgehängt sein, was schematisch durch ein zur Rahmenkonstruktion gehöriges Trägerelement dargestellt wird. Eine Zwischenwand 27 ist zwischen der ersten Seitenwand 25 und der zweiten Seitenwand 26 angeordnet, um die Vakuumkammer 2 von der Kammer 3 zu trennen. Eine in der Darstellung der Fig. 1a in der Kammer 3 sichtbare hintere Wand 22 ist von dem Boden 24, der Decke 23, der ersten Seitenwand 25 und der zweiten Seitenwand 26 begrenzt. Der hinteren Wand 22 liegt eine vordere Wand 21 gegenüber. Die vordere Wand 21 ist von dem Boden 24, der Decke 23, der ersten Seitenwand 25 und der Zwischenwand 27 begrenzt. Die vordere Wand 21, die hintere Wand 22, die erste Seitenwand 25, die zweite Seitenwand 26 sowie die Zwischenwand 27 erstrecken sich in im wesentlichen vertikaler Richtung zwischen dem Boden 23 und der Decke 24.

In der Wand 21 ist eine Tür 20 angeordnet. Die Tür 20 ist eine Schiebetür, welche geöffnet wird, um die Lebensmittel in der Vakuumkammer 2 zu platzieren und nach Abschluss der Vakuumkühlung wieder aus der Vakuumkammer zu entnehmen. Wenn die Schiebetür 20 geschlossen ist, kann in der Vakuumkammer ein Vakuum erzeugt werden. Die Kammer 3 kann an der in der Fig. 1a dargestellten Frontseite offen sein, sodass die Vorrichtung zur Erzeugung des Vakuums, wie beispielsweise eine Vakuumpumpe, Zu- und Ableitungen von Prozessfluiden sowie Vorrichtungen zur Erzeugung, Umwandlung oder Regeneration von Energie, insbesondere Wärme jederzeit zugänglich ist. Die vordere Wand 21 kann auch die Kammer 3 verschliessen, um die Kammer vor Verunreinigungen zu schützen oder als Lärmschutz, um durch die Vakuumpumpe oder der deren Antriebseinheit verursachte Geräusche zu vermindern. Die Kammer 3 kann auch über eine Tür zugänglich sein, diese ist der Einfachheit halber in der Darstellung weggelassen.

In dem dargestellten Ausführungsbeispiel ist die Vakuumkammer 2 von der Wand 21, der Schiebetür 20, der gegenüberliegenden hinteren Wand 22, der ersten Wand 25 und der Zwischenwand 27, der Decke 23 sowie dem Boden 24 begrenzt. Somit bilden die Wände, der Boden und die Decke die Begrenzungselemente der Vakuumkammer 2 aus. Jedes dieser Begrenzungselemente ist von der Rahmenkonstruktion 4 gehalten. Die Wände, der Boden und die Decken können Versteifungselemente enthalten, die beispielsweise als Rippen, als Verstärkungselemente, Trägerelemente, als Struktur in der Oberfläche des Begrenzungselements ausgebildet sein können. Derartige Versteifungselemente sind der Einfachheit halber in der Darstellung weggelassen. Diese Versteifungselemente werden vorgesehen, damit die Begrenzungselemente sich nicht verformen, wenn in der Vakuumkammer 2 ein Vakuum anliegt, sondern ihre Form beibehalten und dementsprechend das Volumen der Vakuumkammer im Wesentlichen konstant bleibt.

Die Wand 21, die gegenüberliegende hintere Wand 22, die erste Seitenwand 25 sowie die zweite Seitenwand 26, die Decke 23 sowie der Boden 24 können in einer Rahmenkonstruktion 4 aufgenommen sein. Die Rahmenkonstruktion 4 ist in Fig. 1a oder Fig.lb durch Trägerelemente angedeutet.

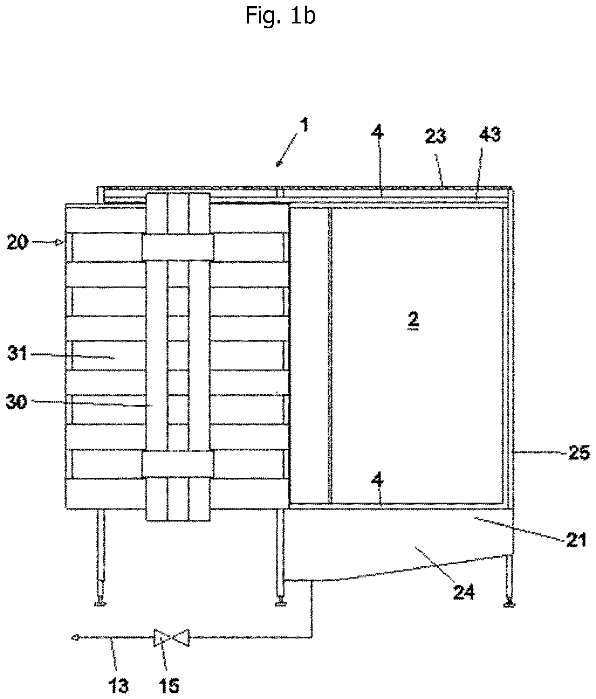

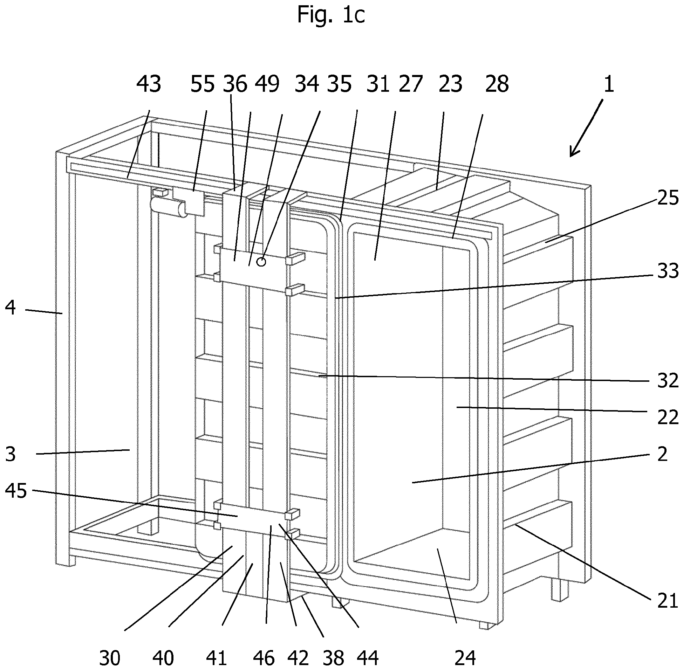

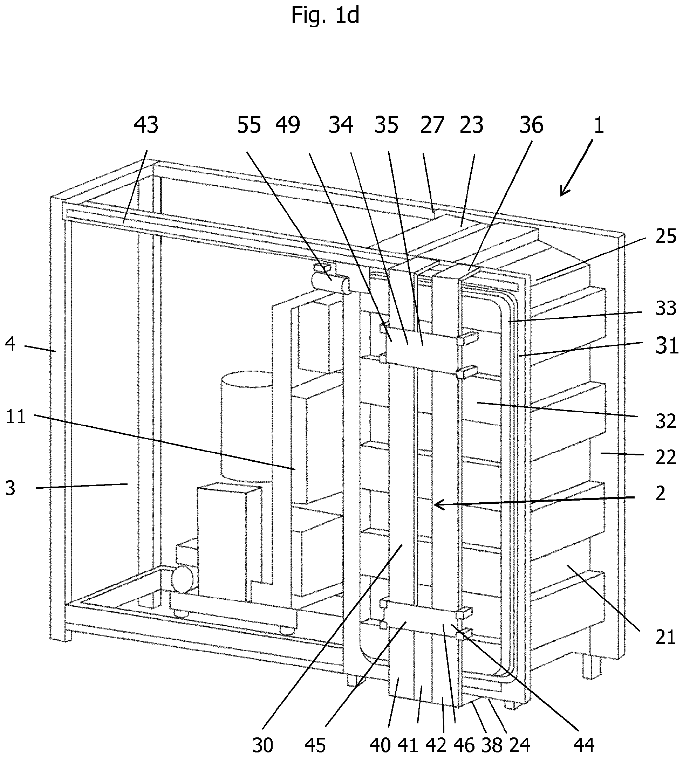

Eine Schiebetür 20 ist in Fig. 1 in geschlossenem Zustand gezeigt, das heisst die Vakuumkammer wird durch die Schiebetür verschlossen. Die Schiebetür 20 ersetzt einen Teil der Wand 21, sodass nach dem Öffnen der Schiebetür der Zugang in den Innenraum der Vakuumkammer frei ist. Die Tür muss eine entsprechend grosse Öffnung verschliessen, damit das Beladen und Entladen der Vakuumkammer schnell erfolgen kann. Idealerweise wird das Backgut, welches sich auf einem Gestell befindet, in die Vakuumkammer mit dem Gestell bereits eingebracht und verbleibt auf demselben Gestell während der gesamten Vakuumkühlung. Nach Abschluss der Vakuumkühlung wird das vakuumgekühlte Backgut wiederum mit den Gestellen entfernt und allenfalls einem weiteren Bearbeitungsschritt unterworfen, der ein Auskühlen, eine Konfektionierung der Waren beinhalten kann.

Die Schiebetür 20 ist gemäss Fig. 1a oder Fig. 1b mittels eines Halteelements 30 in zumindest einem Trägerelement 43 der Rahmenkonstruktion 4 gehalten und kann entlang des Trägerelements 43 verschoben werden. Fig. 1a zeigt die Schiebetür 20 in der geschlossenen Position, Fig. 1b zeigt die Schiebetür in ihrer offenen Position. In Fig. 1c ist der Türflansch 28 sowie ein Teil des Innenraums der Vakuumkammer sichtbar.

Zwischen der Schiebetür 20 und der Wand 21 ist eine Dichtung angeordnet, sodass eine fluiddichte Abdichtung der Vakuumkammer von der Umgebung erfolgt, wenn die Schiebetür geschlossen ist. Die Dichtung kann als umlaufende Dichtung ausgebildet sein, die im Türflansch 28 verläuft oder auf der Innenseite der Schiebetür 20 angebracht ist. Insbesondere kann die umlaufende Dichtung in einer Nut des Türflanschs 28 verlaufen. Die Dichtung ist vorzugsweise einfach montierbar und/oder demontierbar, sodass sie ausgewechselt und gereinigt werden kann. Beispielsweise kann die Dichtung zeitweise in eine Reinigungslösung gelegt werden. Nach Abschluss des Reinigungsschritts kann die Dichtung wieder im Türflansch, auf der Innenseite der Schiebetür oder entlang des Umfangs des Türblatts montiert werden.

Fig. 1c zeigt eine Ansicht einer Vakuumkühlvorrichtung in einer perspektivischen Darstellung in offenem Zustand. Die Vakuumkühlvorrichtung 1 enthält wiederum die Vakuumkammer 2 und eine Kammer 3. Eine Rahmenkonstruktion 4 dient der Aufnahme der Wände der Vakuumkammer sowie der für den Betrieb der Vakuumkammer erforderlichen Antriebe, Vakuumerzeuger sowie der Steuer- und Regelelemente. Wie in Fig. 1a weist die Vakuumkammer eine Decke 23, einen Boden 24, eine erste Seitenwand 25 sowie eine zweite Seitenwand 27 auf. Die hintere Wand 22 kann auch durch eine Tür gebildet werden. Die Vorderseite der Vakuumkammer 2 ist durch eine Schiebetür 20 verschliessbar. Die Schiebetür 20 besteht aus einem Türblatt 31, welches durch eine Mehrzahl von Verstärkungselementen verstärkt werden kann. Beispielsweise kann eine Mehrzahl von Querträgern 32 vorgesehen sein, welche sich bis zu vertikal angeordneten Längsträgern erstrecken, die in der Nähe der Kante des Türblatts 31 angeordnet sind. Die Schiebetür 20 wird von einem Halteelement 30 in der Rahmenkonstruktion 4 gehalten. Hierzu ist eine Führungsschiene 43 an der Rahmenkonstruktion angebracht, entlang derer die Schiebetür von der offenen Stellung in die geschlossene Stellung verschiebbar ist. Das Halteelement ist mit einem Antrieb 55 verbunden, welcher die Schiebetür automatisch aufgrund von empfangenen Regelsignalen eines einer Reglereinheit aufgrund eines Steuerprogramms oder unterstützend zu einer manuellen Verschiebung von der offenen Stellung in die geschlossene Stellung und umgekehrt führen kann. In der geschlossenen Stellung der Schiebetür ist die Vakuumkammer geschlossen und ein Vakuum kann angelegt werden. Diese Stellung ist in Fig. 1d gezeigt. Das Halteelement besteht aus einem ersten Trägerelement 40, einem zweiten Trägerelement 41 und einem dritten Trägerelement 42. Diese Trägerelemente sind über ein erstes Ausgleichselement 35 sowie ein zweites Ausgleichselement 45 mit dem Türblatt 31 verbunden. Die Verbindung erfolgt über ein erstes Klammerelement 34 und ein zweites Klammerelement 44. Das Klammerelement bildet eine Verbindung zwischen Türblatt und Halteelement, wobei das Türblatt 31 relativ zum Halteelement 30 bewegbar ist.

Fig. 1d zeigt eine Ansicht der Vakuumkühlvorrichtung gemäss Fig. 1c in einer perspektivischen Darstellung im geschlossenen Zustand.

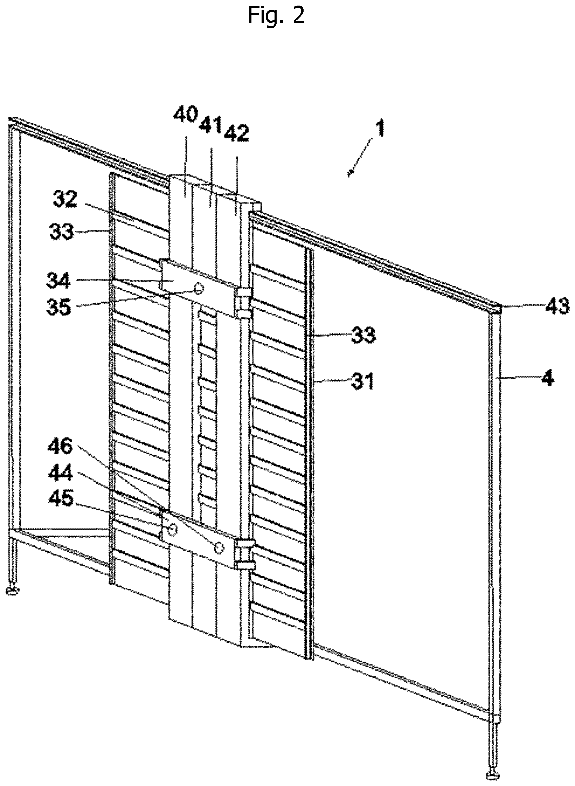

Fig. 2 zeigt eine Ansicht der Schiebetür der Vakuumkühlvorrichtung 1 in einer Ansicht ohne die Vakuumkammer. Das heisst, diese Fig. zeigt nur die Frontseite der Fig. 1. Sie unterscheidet sich von der Darstellung in Fig. 1a und Fig. 1b nur dergestalt, dass das Halteelement 30 für die Schiebetür dreiteilig ausgebildet ist. Dementsprechend ist nicht dargestellt, dass die Wände 25, 26, 27 der Boden 24, die Decke 23 in einer Rahmenkonstruktion 4 aufgenommen sind.

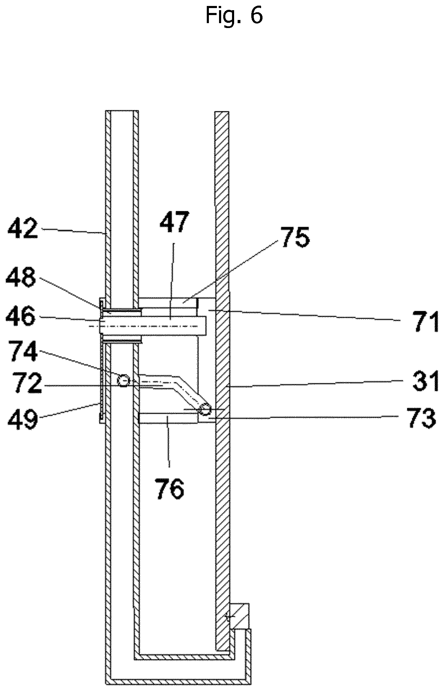

Die Schiebetür 20 weist ein Türblatt 31 auf, welches im Unterschied zum vorhergehenden Ausführungsbeispiel mit zwei Längsträgern 33 sowie einer Mehrzahl von Querträgern 32 verstärkt ist. Das Türblatt 31 wird von einem Halteelement 30 gehalten. Das Halteelement stellt die Verbindung zur Rahmenkonstruktion her und hält die Schiebetür in der Rahmenkonstruktion 4. Hierzu ist eine Führungsschiene 43 gezeigt, entlang derer das Halteelement 30 und das Türblatt 31 in horizontaler Richtung hin und her bewegt werden können. Das Halteelement 30 besteht aus drei Trägerelementen 40, 41, 42, die von einem Klammerelement 34 und einem Klammerelement 44 gehalten werden. Das Klammerelement 34 enthält ein erstes Ausgleichselement 35, das Klammerelement 44 enthält ein zweites Ausgleichselement 45 und ein drittes Ausgleichselement 46. Eines der Ausgleichselemente ist in Fig. 6 im Detail dargestellt.

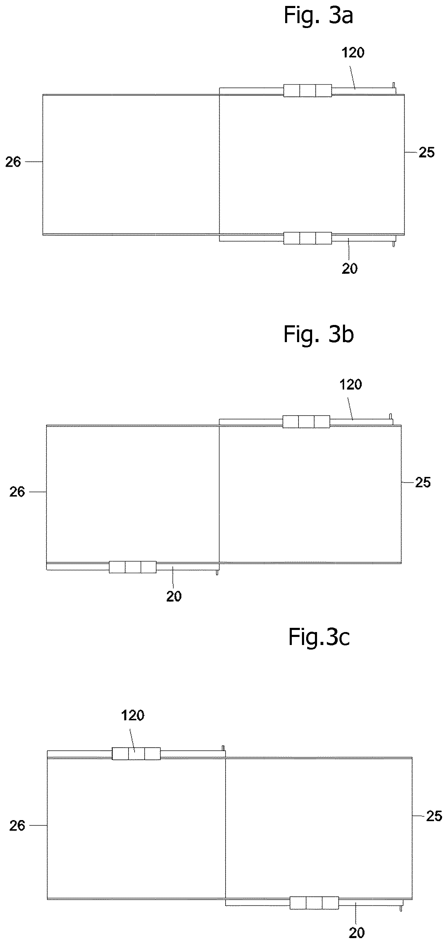

Fig. 3a bis 3c zeigen eine Draufsicht eines weiteren möglichen Ausführungsbeispiels für eine Vakuumkühlvorrichtung 1, welche durch eine Mehrzahl von Schiebetüren 20, 120 verschliessbar ist.

Fig 3a zeigt eine Ansicht einer Vakuumkühlvorrichtung im geschlossenen Zustand. In Fig. 3a ist zusätzlich zur Schiebetür 20 eine zweite Tür 120 dargestellt, welche an der gegenüberliegenden Seite der Vakuumkammer angeordnet ist. Die Schiebetür 20 und die Tür 120 können abwechslungsweise geöffnet oder geschlossen werden, sodass der Vakuumkammer eine Schleusenfunktion zukommen kann. Die zu kühlenden Lebensmittel werden beispielsweise in die Vakuumkammer eingebracht, wenn die Schiebetür 20 geöffnet ist. Die Tür 120 ist geschlossen. Im vorliegenden Ausführungsbeispiel ist die Tür 120 ebenfalls als Schiebetür ausgestaltet, könnte allerdings auch eine Schwenktür ausgebildet sein, was zeichnerisch nicht dargestellt ist.

Fig 3b zeigt eine Ansicht der Vakuumkühlvorrichtung 1 nach Fig. 3a im offenen Zustand von oben zur Beladung mit Lebensmitteln. Sobald die Beladung abgeschlossen ist, wird die Schiebetür 20 geschlossen. Dann wird ein Vakuum an die Vakuumkammer angelegt. Wenn die Vakuumkühlung abgeschlossen ist, wird die Tür 120 geöffnet.

Fig 3c zeigt eine Ansicht der Vakuumkühlvorrichtung 1 nach Fig. 3a im offenen Zustand von oben zur Entladung von Lebensmitteln. Auch die Tür 120 ist in diesem Ausführungsbeispiel als Schiebetür ausgeführt.

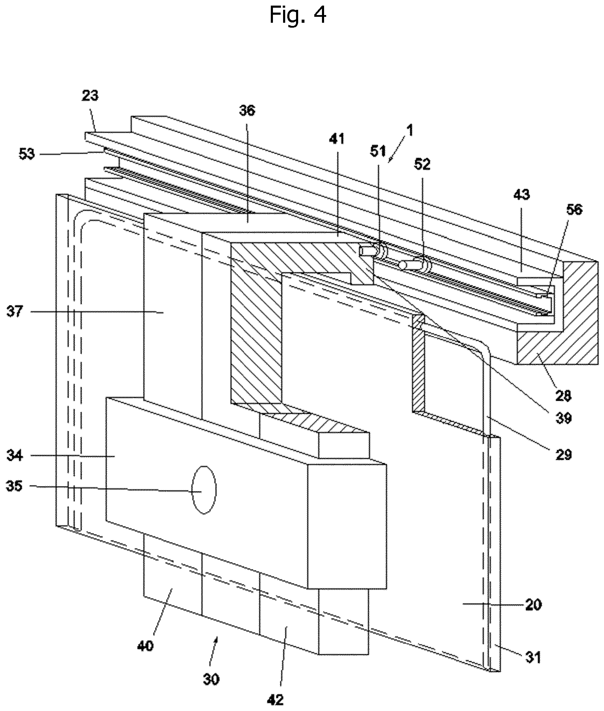

Fig. 4 zeigt eine teilweise Innenansicht der Schiebetür 20. Die Schiebetür kann nach einem der Ausführungsbeispiele gemäss Fig. 1a, Fig. 1b, Fig. 2 bzw. Fig. 3a, Fig. 3b oder Fig. 3c ausgestaltet sein. Die Schiebetür 20 wird über das Halteelement 30 in einer Führungsschiene 53 gehalten. Diese Führungsschiene ist in der Führungsschiene 43 aufgenommen, entlang derer mindestens ein oberer Schenkel 36 des Halteelements 30 gleitet und geführt wird. Das Halteelement 30 ist, wie in Fig. 2 dargestellt, dreiteilig ausgeführt. Es besteht aus 3 gleichartigen Trägerelementen 40, 41, 42 welche über ein Klammerelement 34 zusammen gehalten werden. Eines der Trägerelemente 40 ist vollständig dargestellt, die beiden in der Fig. 4 davor angeordneten Trägerelemente sind abgeschnitten, um den Blick auf die Führungsschiene 53 und die darin geführten Rollenelemente 51, 52 freizugeben. Das Trägerelement 40 enthält ein weiteres Rollenelement, welches in der Darstellung nicht gezeigt ist.

Das Halteelement 30 ist im Wesentlichen C-förmig ausgebildet. Es umfasst einen oberen Schenkel 36, eine Basis 37 und einen hier nicht dargestellten unteren Schenkel 38, der in Fig. 1c zu sehen ist. Der obere Schenkel 36 greift an seinem vakuumkammerseitigen Ende zumindest teilweise in die Führungsschiene 53 ein. An dem Ende 39 des oberen Schenkels 36 ist ein Rollelement 51 angebracht. Das Rollelement 50 gleitet in der Führungsschiene 53, die an der Innenwand der Führungsschiene 43 angebracht ist. Zwei weitere Rollelemente sind vorgesehen, welche zu den Trägerelementen 40, 42 gehören und in gleicher Weise mit deren Enden der Schenkel verbunden sind. Über diese Rollelemente kann die Schiebetür 20 entlang der Führungsschiene 53 verschoben werden.

Die Führungsschiene 53 kann ein Führungselement 56 enthalten, welches die Rollelemente auf ihrer Bahn hält. Dieses Führungselement 56 kann beispielsweise als Rille ausgebildet sein. Durch die Rille werden die Rollelemente 51, 52 daran gehindert, in eine Richtung normal zu der Verschieberichtung der Schiebetür 20 zu verrutschen.

Die Schiebetür 20 bewegt sich somit beim Öffnen zusammen mit den Trägerelementen 40, 41, 42 bis zu einem ersten Anschlagpunkt, der am Ende der Führungsschiene 53 angeordnet ist und nicht dargestellt ist. Dann bewegt sich die Schiebetür beim Schliessen bis zu einem zweiten Anschlagpunkt, der am gegenüberliegenden Ende der Führungsschiene 53 angeordnet ist. Somit ist die Tür zu jeder Zeit teilweise über die Rollelemente 50, 51, 52 auf der Führungsschiene 53 gelagert. Hierdurch wird das Gewicht der Schiebetür 20 über die Rollelemente auf die Führungsschiene 53 und dann von der Führungsschiene 53 auf die Führungsschiene 43 übertragen. Die Führungsschiene 43 kann Teil der Rahmenkonstruktion 4 sein.

Von der Schiebetür 20 ist nur ein Teil des Türblatts 31 gezeigt. Dessen rechte obere Ecke ist ausgeschnitten dargestellt um einen Teil einer Dichtung 29 zu zeigen, welche im Türblatt angeordnet ist. Die Dichtung 29 ist als umlaufende Dichtung ausgebildet. Die Dichtung 29 verläuft in einer Ausnehmung des Türblatts 31. Alternativ könnte die Dichtung auch im Türflansch 28 angeordnet werden, was in der Zeichnung nicht dargestellt ist. Im geschlossenen Zustand liegt die Dichtung 29 auf dem Türflansch 28 auf.

Die Schiebetür ist mittels eines nicht dargestellten Schliess- und Öffnungsmechanismus zwischen einem abgedichteten Zustand und einem Zustand verschiebbar, in welchem ein Öffnen oder Schliessen der Schiebetüre ermöglicht ist.

Mittels des Schliessmechanismus kann die Schiebetür 20 in Richtung des Innenraums der Vakuumkammer 2 verschoben werden, wenn sie sich in der geschlossenen Position befindet. Auf die Dichtung 29 wird ein Druck ausgeübt, sodass sie das Türblatt 31 gegen den Türflansch 28 abdichtet.

Wenn die Schiebetür bewegt werden soll, wird ein Öffnungsmechanismus betätigt. Die Dichtung 29 wird entlastet, es besteht auch die Möglichkeit, einen Abstand zwischen Dichtung und Türblatt einzustellen, sodass die Schiebetür berührungsfrei bewegt werden kann. Nach dieser Variante hat die Dichtung einen Abstand zum Türblatt 31, sodass die Dichtung 29 während der Bewegung nicht unter Belastung steht. Erst wenn die Tür geschlossen werden soll, wird durch den Schliessmechanismus die Schiebetür gegen den Türflansch bewegt, dass die Dichtung 29 auf dem Türflansch 28 aufliegt.

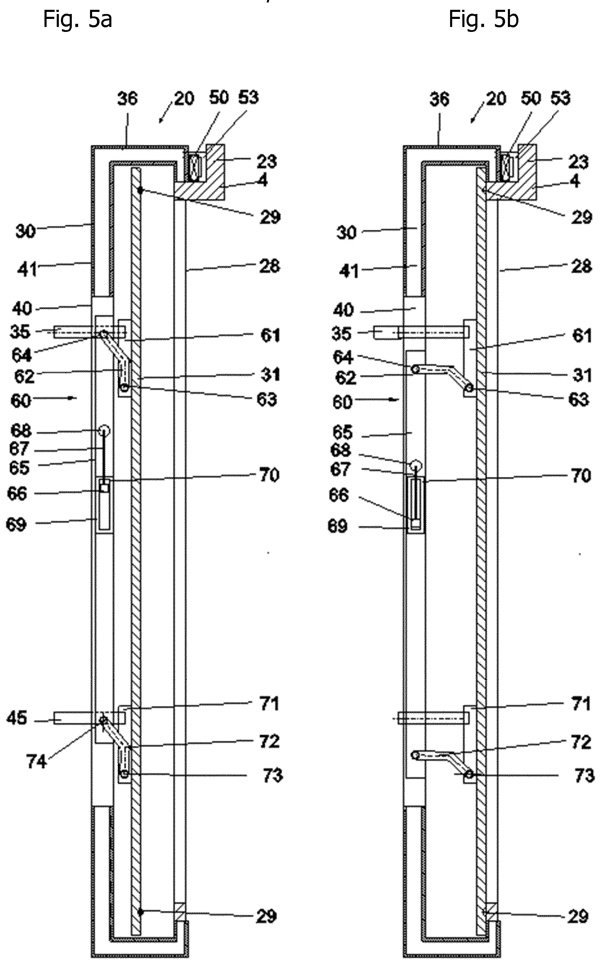

Fig. 5a und Fig. 5b zeigen ein Ausführungsbeispiel für einen Schliess- und Öffnungsmechanismus für eine Schiebetür 20 nach einem der vorhergehenden Ausführungsbeispiele. Die Schiebetür wird hierzu in einem Schnitt gezeigt, welcher das Türblatt 31 sowie das Halteelement 30 in geschnittenem Zustand zeigen. Fig. 5a zeigt den geöffneten Zustand, Fig. 5b zeigt den geschlossenen Zustand der Schiebetür 20. Im geöffneten Zustand hat das Türblatt 31 einen Abstand zum Türflansch 28. Ein Teil der zur Decke 23 der Vakuumkammer 1 gehörigen Rahmenkonstruktion 4 ist im Schnitt dargestellt. Die Rahmenkonstruktion 4 weist in der vorliegenden Darstellung einen L-förmigen Querschnitt auf. Auf der durch das L gebildeten Auflagefläche ist eine Führungsschiene 53 angeordnet, in welcher mindestens ein Rollenelement 50 aufgenommen ist. Das Rollenelement ist mit dem oberen Schenkel 36 des Halteelements 30 verbunden.

Das Halteelement 30 kann somit durch die Bewegung der Rollenelemente in der Führungsschiene 53 in horizontaler Richtung (hier aus der Bildebene hinaus) verschoben werden. Das Halteelement 30 trägt das Türblatt 31. Die tragende Funktion wird durch die Ausgleichselemente 35, 45, 46 wahrgenommen. Das Ausgleichselement 35 ist an einem Aufbau 61 des Türblatts 31 angebracht. In diesem Aufbau kann eine Bohrung angeordnet sein, welche das bolzenförmige Ausgleichselement aufnimmt. Das Ausgleichselement 35 ist somit fest mit dem Türblatt verbunden. Das Ausgleichselement verläuft durch eine Bohrung im Halteelement und ragt je nach Position der Schiebetür aus der Bohrung über eine unterschiedliche Länge hinaus. Das Ausgleichselement gleicht somit die unterschiedlichen Abstände zwischen Halteelement und Türblatt im offenen oder geschlossenen Zustand der Schiebetür aus. Der Unterschied zwischen geöffnetem und geschlossenen Zustand ist stark übertrieben dargestellt. In der Praxis beträgt der Unterschied nur wenige Millimeter, da es genügt, dass die Dichtung 29 nicht mehr in Kontakt mit dem Türflansch 28 ist, um die Schiebetür zu öffnen. Sobald die Dichtung frei ist, können keine Scherkräfte mehr auf die Dichtung wirken, sodass die Dichtung durch den Verschiebevorgang kaum auf Scherung beansprucht wird. Durch diese Massnahme kann die Lebensdauer der Dichtung von wenigen Tagen auf bis auf einige Jahren erhöht werden.

Der Öffnungs- und Schliessmechanismus 60 umfasst ein am Aufbau 61 drehbar befestigtes Hebelelement 62. Das Hebelelement 62 ist mit einem Übertragungselement 65 drehbar verbunden. Der Drehpunkt 63 ist die Verbindung des Hebelelements 62 des Türblatts mit dem Aufbau 61. Der Drehpunkt 64 ist die Verbindung des Halteelements des Hebelelements 62 mit dem Übertragungselement 65. Das Übertragungselement 65 wird durch ein Antriebselement 70 betätigt. Hier ist das Antriebselement 70 als fluidbetätigter Zylinder 69 dargestellt, in welchem ein Kolben 66 bewegbar ist. Das Antriebselement ist fest mit dem Trägerelement 42 verbunden, welches vor der Schnittebene liegt und daher in diesem Schnitt nicht sichtbar ist. Der Kolben weist eine Kolbenstange 67 auf, welche über ein Befestigungselement 68 mit dem Übertragungselement 65 verbunden ist.
Ein zweiter Aufbau 71 ist vorgesehen, an welchem ein zweites drehbar befestigtes Hebelelement 72 angeordnet ist. Das Hebelelement 72 ist mit dem Übertragungselement 65 drehbar verbunden. Der Drehpunkt 73 ist die Verbindung des Türblattendes des Hebelelements 72 mit dem Aufbau 71. Der Drehpunkt 74 ist die Verbindung des Halteelements des Hebelelements 72 mit dem Übertragungselement 65.

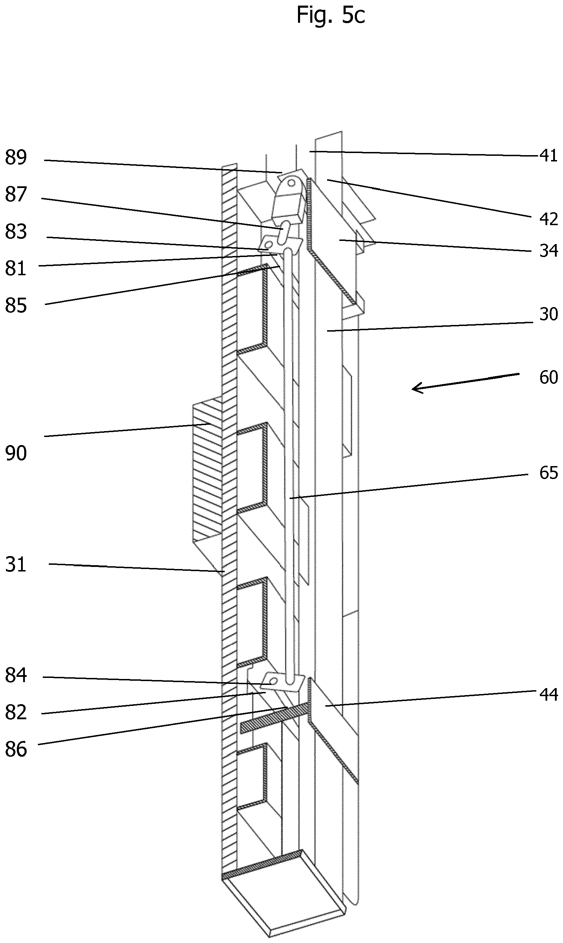

Fig. 5c zeigt ein Detail eines Öffnungs- und Schliessmechanismus 60 nach einer Variante. Hierzu ist die Tür 20 entlang des Halteelements 30 in vertikaler Richtung aufgeschnitten. Das Trägerelement 42 ist sichtbar, das Trägerelement 40 würde vor der Zeichnungsebene liegen und das Trägerelement 41 ist zu Vereinfachung der Darstellung weggelassen. Das Klammerelement 34 und das Klammerelement 44 sind teilweise geschnitten dargestellt. Der Öffnungs- und Schliessmechanismus umfasst eine Stange 65, die sich zwischen einem oberen, ersten Gelenkelement 81 und einem unteren, zweiten Gelenkelement 82 erstreckt. Jedes der Gelenkelemente ist über ein Verbindungselement 83, 84 mit einem am Türblatt 31 oder am Querträger 32 angebrachten Verstärkungselement 85, 86 verbunden. Das erste Gelenkelement 81 ist mit einem fluidbetätigten Zylinder 89 verbunden. Der fluidbetätigte Zylinder 89 ist mit einem Ende fest mit dem Halteelement 30 verbunden, sein anderes Ende ist mit dem Gelenkelement 81 verbunden.
Wird der fluidbetätigte Zylinder betätigt, das heisst der Kolben mit seiner Kolbenstange 87 nach unten verschoben, bewegt sich das Gelenkelement 81 nach unten. Über die Stange 65 ist das Gelenkelement 81 mit dem Gelenkelement 82 verbunden, welches eine gleichartige Bewegung durchführt. Durch die Bewegung des Gelenkelements wird die Tür in Richtung des Halteelements bewegt. Das heisst, die Tür hebt vom Türflansch ab, sodass die Vakuumkammer geöffnet wird. Die an der Tür angebrachte Dichtung wird somit vom Türflansch so weit entfernt, dass keine Scherkräfte bei einer Bewegung der Tür von der geschlossenen Stellung in die offene Stellung auftreten.

In Fig. 5c ist auch ein balkenförmiges Verstärkungselement 90 gezeigt, welches an der Innenseite der Tür angebracht ist. Dieses Verstärkungselement dient dazu, die Tür gegen Kräfte zu versteifen, die infolge des Anlegens des Vakuums entstehen. Weil die Tür eine grosse ebene Oberfläche aufweist, die bei Betrieb der Vakuumkammer einem Unterdruck ausgesetzt ist, wirken Biegespannungen auf die Tür. Diese Biegespannungen werden umso grösser, je weiter die Flächenpunkte auf der Türoberfläche von der Einspannung, das heisst dem Türflansch entfernt sind.

Fig. 6 zeigt ein Detail eines der Ausgleichselemente. Hier ist das Ausgleichselement 46 gezeigt, die Ausgleichselemente 35, 45 können aber in gleicher Weise aufgebaut sein. Das Ausgleichselement besteht aus einem bolzenförmigen Elementkörper 47 sowie einem Verbindungselement 48, welches um den Elementkörper 47 herum angeordnet ist. Der Elementkörper 47 und das Verbindungselement sind in eine Öffnung des Trägerelements 42 sowie eine weitere Öffnung des Aufbaus 71 des Türblatts 31 eingepasst. Der Elementkörper ist mit einem äusseren Plattenelement 49 verbunden, welches Teil des Klammerelements 44 ist. Das Verbindungselement 48 ist gleitend mit dem Elementkörper 47 verbunden und erstreckt sich bis zum Plattenelement 49. Das Plattenelement ist über oberes und ein unteres Halteelement 75, 76 mit dem Aufbau 71 verbunden.

Die vorliegende Anordnung hat den Vorteil, dass sich der Öffnungs- und Schliessmechanismus nicht mit dem Vakuumbereich in Kontakt befindet. Denkbar wäre auch, die Vakuumkammer 2 auf der linken Seite der Darstellung gemäss Fig. 2 anzuordnen. Es wäre auch möglich, die Rollelemente durch Kugelelemente zu ersetzen, wobei eine geeignete Haltevorrichtung für die Kugelelemente vorgesehen werden kann.

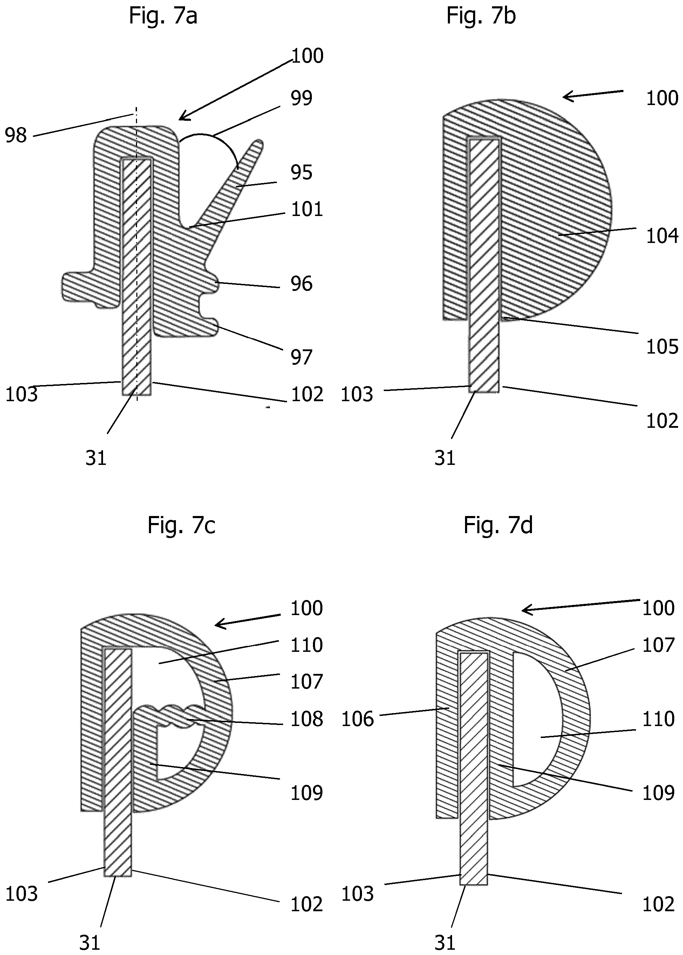

Fig. 7a zeigt eine erste Variante für eine Türdichtung 100, welche um eine Kante des Türblatts 31 angeordnet ist. Die Türdichtung weist eine erste Lippe 95, eine zweite Lippe 96 und eine dritte Lippe 97 auf. Die erste Lippe 95 ist in einem spitzen Winkel alpha 99 zu einer durch das Türblatt verlaufenden, in der Darstellung vertikalen Achse 98 angeordnet. Der spitze Winkel 99 wird dabei von der Kante des Türblatts 31 her gemessen. Diese erste Lippe 95 liegt auf dem Türflansch auf, wenn die Tür geschlossen ist und wird entsprechend verformt. Zusätzlich wirkt in der Nut 101 der Umgebungsdruck, welcher die erste Lippe 95 zusätzlich gegen den Türflansch presst, wenn ein Vakuum angelegt wird.

Fig. 7b zeigt einen Schnitt einer zweiten Variante für eine Türdichtung. Diese Türdichtung ist ebenfalls um die Kante des Türblatts 31 herum angeordnet. Auf der Innenseite 102 des Türblatts 31 ist eine Ausbuchtung 104 angeordnet, welche aus einem elastischen Material besteht. Diese Ausbuchtung wird im Betrieb gegen den Türflansch gepresst. Die Ausbuchtung weist eine umlaufende Nut 105 auf, welche über die Kante des Türblatts 31 gestülpt ist. Vorzugsweise ist der lichte Durchmesser der Nut 105 kleiner als die Dicke des Türblatts 31, also dem Normalabstand von dessen Innenseite 102 zu dessen Aussenseite 103. Der Schenkel 106 der Türdichtung, welcher sich entlang der Aussenseite 103 des Türblatts erstreckt, kann eine konstante Dicke aufweisen.

Fig. 7c zeigt einen Schnitt einer dritten Variante für eine Türdichtung 100, welche eine Ausbuchtung 107 aufweist, die nicht vollständig geschlossen ist. Diese Türdichtung ist einfach montierbar, da der Reibungswiderstand vermindert ist, da sie nicht entlang der gesamten Tiefe der Nut 105 auf der Kante des Türblatts aufliegt. Auch diese Türdichtung weist auf der Aussenseite 103 des Türblatts einen Schenkel 106 auf. Die Ausbuchtung 107 weist einen Hohlraum 110 auf. Der Hohlraum enthält ein Federelement, welches hier als elastisches Verbindungselement 108 zwischen dem Innenschenkel 109 und dem bogenförmigen Körper der Ausbuchtung 107 im Hohlraum 110 angeordnet ist.

Fig. 7d eine vierte Variante für eine Türdichtung 100, welche sich von der vorhergehenden Variante gemäss Fig. 7c dadurch unterscheidet, dass der Hohlraum 110 geschlossen ist. Hierdurch können keine Verunreinigungen in den Hohlraum gelangen, sodass diese Dichtung höchsten Hygieneanforderungen genügen kann. Die bogenförmige Ausbuchtung 107 ist an ihren beiden Enden mit dem Innenschenkel 109 der Dichtung verbunden, welcher wiederum auf der Innenseite 102 des Türblatts 31 aufliegt.

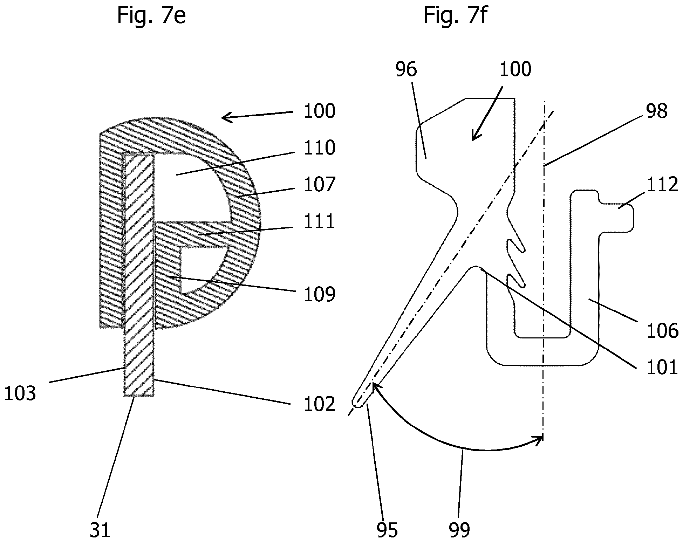

Fig. 7e zeigt eine fünfte Variante für eine Türdichtung 100, die ähnlich der Türdichtung gemäss Fig. 7c aufgebaut ist. Der einzige Unterschied besteht darin, dass das Verbindungselement 111 nicht als Federelement ausgebildet ist. Das Verbindungselement 111 kann aber aus elastischem Material bestehen, sodass es im Vakuumbetrieb stauchbar ist.

Fig. 7f zeigt eine sechste Variante für eine Türdichtung 100, die ähnlich der Türdichtung gemäss Fig. 7a aufgebaut ist. welche um eine Kante des Türblatts 31 angeordnet ist. Diese Dichtung ist im Wesentlichen als ein u-förmiger Dichtungskörper ausgestaltet. Der Innenschenkel des u-förmigen Dichtungskörpers dient der Aufnahme des Türblatts, welches hier der Einfachheit halber weggelassen ist. Die Türdichtung weist eine erste Lippe 95 sowie eine zweite Lippe 96 auf, die im geschlossenen Zustand auf dem Türflansch aufliegen. Die erste Lippe 95 ist in einem spitzen Winkel alpha 99 zu einer durch das Türblatt verlaufenden, in der Darstellung vertikalen Achse 98 angeordnet. Diese erste Lippe 95 liegt auf dem Türflansch auf, wenn die Tür geschlossen ist und wird entsprechend verformt. Zusätzlich wirkt in der Nut 101 der Umgebungsdruck, welcher die erste Lippe 95 zusätzlich gegen den Türflansch presst, wenn ein Vakuum angelegt wird. Auch an zumindest einer Innenwand des Schenkels des u-förmigen Dichtungskörpers können Lippen angebracht sein. In der Darstellung der Fig. 7f sind zwei derartige Lippen gezeigt. Durch diese Lippen wird der Dichtungskörper gegen das Türblatt gepresst und haftet auch dann noch an der Innenwand, wenn die Elastizität des Dichtmaterials mit zunehmender Gebrauchsdauer abnimmt. Ein Vorsprung 112 kann zu Montage- oder Demontagezwecken der Dichtung am Schenkel 106 vorgesehen sein.

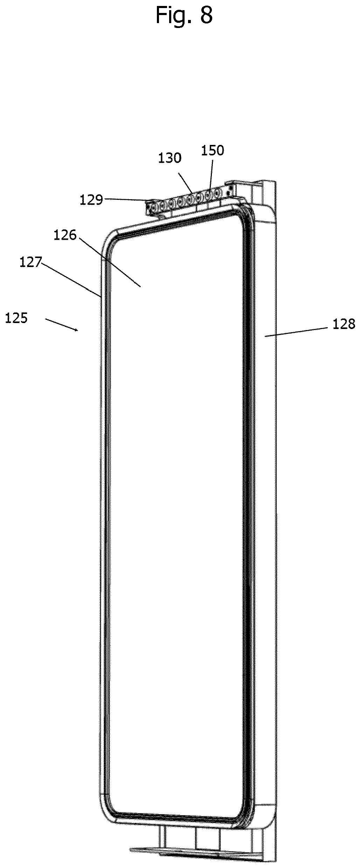

Fig. 8 zeigt eine Innenansicht einer Schiebetür 125 für eine Vakuumkühlvorrichtung nach einem vierten Ausführungsbeispiel. Die Schiebetür 125 weist ein Türblatt 126 auf, welches eine umlaufende Dichtung 127 enthält, die entlang der Kanten des Türblatts 126 verläuft. In dieser Darstellung verdeckt das Türblatt 126 die dahinter gelegene Verstärkungskonstruktion, sodass die das Türblatt tragenden Elemente nicht sichtbar sind. Die tragenden Elemente sind unter einer Abdeckung 128 angeordnet, die an der Aussenseite des Türblatts angebracht ist. Diese Abdeckung kann einteilig oder mehrteilig ausgeführt sein. Das Türblatt ist über einen oberen Schenkel 129 eines Halteelements 130 mit einem Türflansch verbunden, der in ähnlicher Form wie der Türflansch 28 in Fig. 4 ausgebildet sein kann und in dieser Darstellung nicht sichtbar ist.

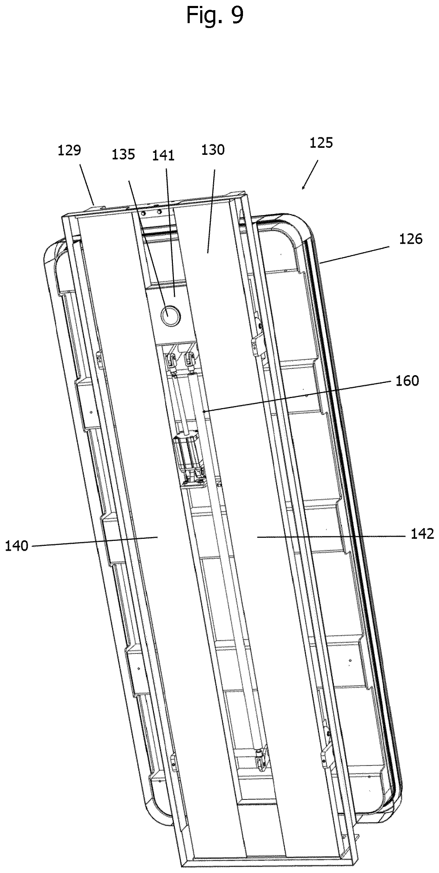

Fig. 9 zeigt eine Aussenansicht der Schiebetür gemäss Fig. 8, wobei die Abdeckung 129 abgenommen ist, um die Details des Öffnungs- und Schliessmechanismus 160 für die Schiebetür 125 zu zeigen. Das Halteelement 130 kann somit durch die Bewegung der Rollenelemente in der Führungsschiene in horizontaler Richtung (hier aus der Bildebene hinaus) verschoben werden. Das Halteelement 130 trägt das Türblatt 126. Die tragende Funktion wird durch das Ausgleichselement 135 wahrgenommen. Das Ausgleichselement 135 ist an einem Aufbau des Türblatts 126 angebracht, der in dieser Ansicht durch das Trägerelement 141 verdeckt ist. In dem vorliegenden Ausführungsbeispiel ist das Trägerelement 141 als ein Verbindungselement ausgebildet, welches das Trägerelement 140 mit dem Trägerelement 142 verbindet. Im Aufbau und im Trägerelement 141 ist eine Bohrung angeordnet, welche das bolzenförmige Ausgleichselement 135 aufnimmt. Das Ausgleichselement 135 ist somit fest mit dem Türblatt 126 verbunden. Das Ausgleichselement 135 verläuft durch eine Bohrung im Trägerelement 141 und ragt je nach Position der Schiebetür aus der Bohrung über eine unterschiedliche Länge hinaus. Das Ausgleichselement gleicht somit die unterschiedlichen Abstände zwischen Halteelement und Türblatt im offenen oder geschlossenen Zustand der Schiebetür aus. Die Verschiebung beträgt nur wenige Millimeter, da es genügt, dass die Dichtung 127 nicht mehr in Kontakt mit dem Türflansch ist, um die Schiebetür zu öffnen. Sobald die Dichtung frei ist, können keine Scherkräfte mehr auf die Dichtung wirken, sodass die Dichtung durch den Verschiebevorgang nicht auf Scherung beansprucht wird. Durch diese Massnahme kann die Lebensdauer der Dichtung von wenigen Tagen auf bis auf einige Jahre erhöht werden.

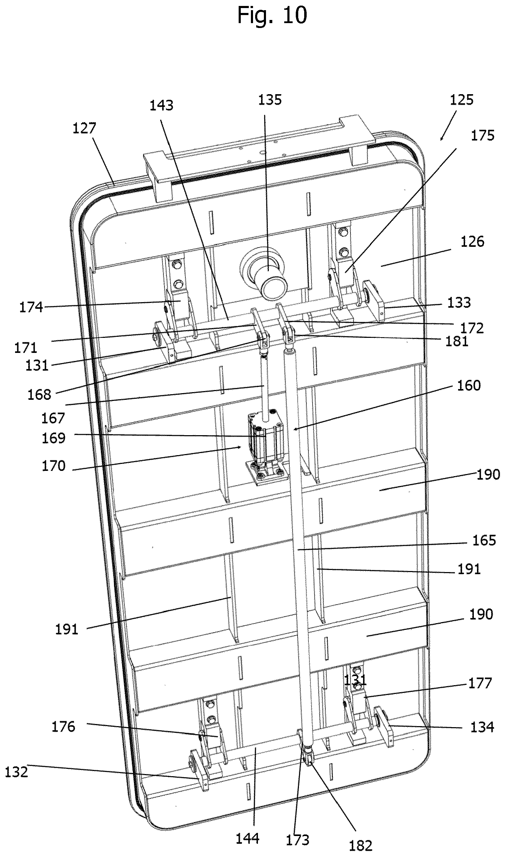

Der Öffnungs- und Schliessmechanismus 160 ist in Fig. 10 im Detail dargestellt. In Fig. 10 sind die Trägerelemente 140, 141, 142 weggelassen, um den Blick auf den Öffnungs- und Schliessmechanismus freizugeben. Am Trägerelement 140 sind ein Arm 131 sowie ein Arm 132 angebracht. Am Trägerelement 142 sind ein Arm 133 sowie ein Arm 134 angebracht. Eine Verbindungsstange 143 erstreckt sich von dem Arm 131 bis zu dem Arm 133. Die beiden Enden der Verbindungsstange 143 sind in Bohrungen der Arme 131, 133 aufgenommen. Die Verbindungsstange 143 hat eine Mittenachse, die sich in im Wesentlichen horizontaler Richtung erstreckt, wenn die Schiebetür eingebaut ist. Die Schiebetür ist über Scharnierelemente 174, 175 mit der Verbindungsstange 143 verbunden. Die Schiebetür ist über Scharnierelemente 176, 177 mit der Verbindungsstange 144 verbunden.

Eine Verbindungsstange 144 erstreckt sich von dem Arm 132 bis zu dem Arm 134. Die beiden Enden der Verbindungsstange 144 sind in Bohrungen der Arme 132, 134 aufgenommen. Die Verbindungsstange 144 hat eine Mittenachse, die sich in im Wesentlichen horizontaler Richtung erstreckt, wenn die Schiebetür eingebaut ist. Eine Verbindungsstange 165 verbindet die beiden Verbindungsstangen 143 und 144 miteinander. Mit der Verbindungsstange 143 ist ein Antriebselement 170 in der Form eines fluidbetätigten Zylinders 169 verbunden. Der fluidbetätigte Zylinder weist eine Kolbenstange 167 auf, die von einem im Inneren des fluidbetätigten Zylinders 169 hin-und her beweglichen Kolben bewegt werden kann. Das freie Ende der Kolbenstange ist als ein Gelenkelement 168 ausgebildet, welches mit einem Gelenkarm 171 verbunden ist, der an der Verbindungsstange 143 angebracht ist. Ein zweiter Gelenkarm 172 ist an der Verbindungsstange 143 angebracht. Dieser Gelenkarm 172 ist über ein erstes Gelenkelement 181 mit einer Verbindungsstange 165 drehbar verbunden. Die Verbindungsstange ist über ein zweites Gelenkelement 182 mit der Verbindungsstange 144 verbunden. Zwischen dem Gelenkelement 182 und der Verbindungsstange 144 erstreckt sich ein Gelenkarm 173.

Wird der fluidbetätigte Zylinder 169 betätigt, das heisst der Kolben und damit die Kolbenstange 167 nach unten verschoben, bewegt sich das Gelenkelement 168 nach unten. Über das Gelenkelement 171 wird die Verbindungsstange 143 um ihre horizontale Achse bewegt und mit ihr das Scharnierelement 174 und 175 sowie der Gelenkarm 172 und das Gelenkelement 181, welches die Verbindungsstange 165 bewegt. Die Verbindungsstange 165 initiiert eine Abwärtsbewegung des Gelenkelements 182 sowie des Gelenkarms 173. Der Gelenkarm 173 ist mit der Verbindungsstange 144 verbunden, die ebenfalls um ihre horizontale Achse derart gedreht wird, dass die Scharnierelemente 176 und 177 betätigt werden. Das Türblatt 126 der Schiebetür 125 wird hierdurch vom Türflansch wegbewegt und die Vakuumkammer geöffnet. Die Schiebetür 125 kann daher verschoben werden, um den Einlass in die Vakuumkammer zur Entladung oder Beladung mit Backwaren freizugeben. Soll die Vakuumkammer geschlossen werden, wird die Kolbenstange 167 nach oben verschoben.

In Fig. 10 sind auch eine Mehrzahl an balkenförmigen Verstärkungselementen 190 gezeigt, welche an der Aussenseite des Türblatts 126 angebracht sind. Diese Verstärkungselemente dienen dazu, das Türblatt gegen Kräfte zu versteifen, die infolge des Anlegens des Vakuums entstehen. Weil das Türblatt eine grosse ebene Oberfläche aufweist, die bei Betrieb der Vakuumkammer einem Unterdruck ausgesetzt ist, wirken Biegespannungen auf das Türblatt. Diese Biegespannungen werden umso grösser, je weiter die Flächenpunkte auf der Türoberfläche von der Einspannung, das heisst dem Türflansch entfernt sind. Zusätzlich zu den balkenförmigen Verstärkungselementen 190 können auch Verstrebungen 191 vorgesehen sein, die kreuzweise zu den Verstärkungselementen 190 verlaufen.

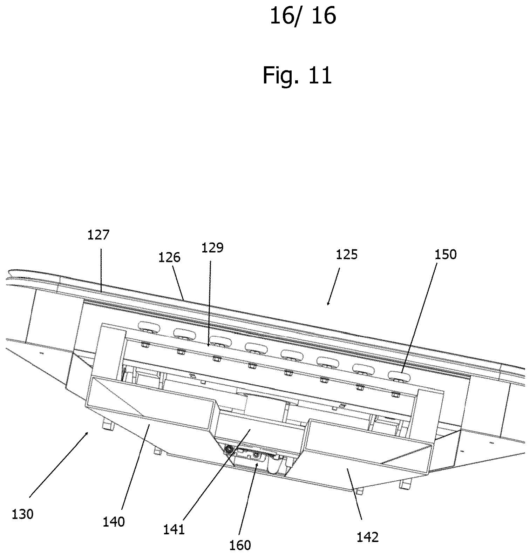

Fig. 11 zeigt die Schiebetür 125 in einer Ansicht von oben. Die Rahmenkonstruktion ist wie in Fig. 5a oder Fig. 5b ausgeführt. In der Rahmenkonstruktion ist eine Führungsschiene angeordnet, in welcher mindestens ein Rollelement 150 aufgenommen ist. Das Rollelement ist mit dem oberen Schenkel 129 des Halteelements 130 verbunden und darin drehbar gelagert.

## Patentansprüche

1. Vakuumkühlvorrichtung (1) zur Kühlung von Lebensmitteln, insbesondere heissen Backwaren umfassend eine Vakuumkammer (2), die zur Aufnahme des Lebensmittels für dessen Kühlung ausgebildet ist, wobei die Vakuumkammer (2) durch eine Schiebetür (20, 125) verschliessbar ist, wobei die Schiebetür (20, 125) oder der Türflansch (28) eine Dichtung (29, 100, 127) enthält, die im geschlossenen Zustand der Schiebetür (20, 125) eine fluiddichte Abdichtung der Vakuumkammer (2) gegen die Umgebung ermöglicht, wobei die Schiebetür (20, 125) ein Halteelement (30, 130) aufweist, welches ein Trägerelement (40, 41, 42, 140, 141, 142) enthält und ein Türblatt (31, 126) der Schiebetür (20, 125) trägt, wobei das Trägerelement in einer Führungsschiene (43) verschiebbar gelagert ist, sodass die Schiebetür (20, 125) im Wesentlichen in horizontaler Verschieberichtung zum Öffnen oder Verschliessen der Vakuumkammer (2) verschiebbar ist, **dadurch gekennzeichnet, dass** das Trägerelement (40, 41, 42, 140, 141, 142) ein bolzenförmiges Ausgleichselement (35, 45, 46, 135) enthält, wobei das Ausgleichselement (35, 45, 46, 135) fest mit dem Türblatt (31, 126) der Schiebetür (20, 125) verbunden ist, wobei das Ausgleichselement (35, 45, 46, 135) durch eine Bohrung im Trägerelement (40, 41, 42, 140, 141, 142) verläuft und je nach Position der Schiebetür (20, 125) aus der Bohrung über eine unterschiedliche Länge hinaus ragt, sodass das Türblatt (31, 126) der Schiebetür (20, 125) mittels des Ausgleichselements (35, 45, 46, 135) relativ zum Halteelement (30, 130) bewegbar ist.

2. Vakuumkühlvorrichtung nach Anspruch 1, wobei das Türblatt (31) der Schiebetür (20, 125) im geschlossenen Zustand auf einem Türflansch (28) aufliegt.

3. Vakuumkühlvorrichtung nach Anspruch 1 oder 2, wobei die Dichtung (29, 100, 127) als umlaufende Dichtung ausgebildet ist.

4. Vakuumkühlvorrichtung nach Anspruch 1, wobei am Trägerelement (40, 41, 42, 140, 141, 142) Rollelemente (50, 51, 52, 150) angebracht sind, welche in der Führungsschiene (43) entlang einer horizontalen Bahn bewegbar sind.

5. Vakuumkühlvorrichtung nach einem der vorhergehenden Ansprüche, wobei die Schiebetür (20, 125) einen Öffnungs- und/oder Schliessmechanismus (60, 160) enthält.

6. Vakuumkühlvorrichtung nach Anspruch 5, wobei die Schiebetür (20, 125) durch Betätigen des Schliessmechanismus derart bewegt wird, dass die Dichtung (29, 100, 127) auf dem Türflansch (28) aufliegt, sodass eine Dichtwirkung entsteht.

7. Vakuumkühlvorrichtung nach einem der vorhergehenden Ansprüche, wobei eine erste und eine zweite Schiebetür (20, 120, 125) vorgesehen sind.

8. Vakuumkühlvorrichtung nach einem der vorhergehenden Ansprüche, wobei die Schiebetür ein Verstärkungselement (90, 190) und/oder eine Verstrebung (191) enthält.

9. Vakuumkühlvorrichtung nach einem der vorhergehenden Ansprüche 3 bis 8, wobei das Türblatt (31, 126) im geschlossenen Zustand zumindest entlang der Dichtung (29, 100, 127) am Türflansch aufliegt.

10. Vakuumkühlvorrichtung nach Anspruch 9, wobei die Dichtung (29, 100, 127) ein Ausgleichselement zur Abdichtung von Unebenheiten im Türblatt (31, 126) und/oder Türflansch (28) enthält.

11. Verfahren zur Betätigung einer Schiebetür (20, 125) für eine Vakuumkühlvorrichtung (1) umfassend die Schritte: Betätigen eines Öffnungs- und Schliessmechanismus (60, 160), wobei die Schiebetür zum Öffnen oder Verschliessen im Wesentlichen in horizontaler Richtung zwischen einer geöffneten und einer geschlossenen Stellung verschoben wird, wobei durch Betätigen des Öffnungs- und Schliessmechanismus (60, 160) zum Verschliessen einer Vakuumkammer (2) der Vakuumkühlvorrichtung ein Türblatt (31, 126) der Schiebetür (20, 125) gegen einen Türflansch (28) einer Rahmenkonstruktion (4) gedrückt wird, wobei in einem zweiten Schritt eine Dichtung (29, 100, 127) zwischen dem Türblatt (31, 126) und dem Türflansch (28) derart zusammengedrückt wird, dass die Vakuumkammer (2) vakuumdicht verschlossen wird, sodass durch die Dichtung (29, 100, 127) eine langsame Druckabsenkung zur schonenden Vakuumkühlung von Lebensmitteln ermöglicht ist, wobei die Schiebetür (20, 125) ein Halteelement (30, 130) aufweist, welches ein Trägerelement (40, 41, 42, 140, 141, 142) enthält und ein Türblatt (31, 126) der Schiebetür (20, 125) trägt, wobei das Trägerelement in einer Führungsschiene (43) verschiebbar gelagert ist, sodass durch die Schiebetür die Vakuumkammer (2) geöffnet oder geschlossen werden kann, wenn die Schiebetür (25, 125) im Wesentlichen in horizontaler Verschieberichtung verschoben wird, **dadurch gekennzeichnet, dass** das Trägerelement (40, 41, 42, 140, 141, 142) ein bolzenförmiges Ausgleichselement (35, 45, 46, 135) enthält, wobei das Ausgleichselement (35, 45, 46, 135) fest mit dem Türblatt (31, 126) der Schiebetür (20, 125) verbunden ist, wobei das Ausgleichselement (35, 45, 46, 135) durch eine Bohrung im Trägerelement (40, 41, 42, 140, 141, 142) verläuft und je nach Position der Schiebetür (20, 125) aus der Bohrung über eine unterschiedliche Länge hinaus ragt, sodass das Türblatt (31, 126) der Schiebetür (20, 125) mittels des Ausgleichselements (35, 45, 46, 135) relativ zum Halteelement (30, 130) bewegt werden kann.

12. Verfahren nach Anspruch 11, wobei die Schiebetür (20, 125) von Hand geöffnet oder geschlossen werden kann.

13. Verfahren nach einem der Ansprüche 11 oder 12, wobei die Schiebetür (20, 125) einen Antrieb (55) für ihre Verschiebung aufweist, welcher von der Schiebetür entkoppelt werden kann, um den Öffnungs- und/oder Schliessmechanismus (60, 160) der Schiebetür (20, 125) zu betätigen.

## Claims

1. A vacuum cooling device (1) for cooling of foodstuff, in particular hot bakery products, comprising a vacuum chamber (2) which is configured for receiving the foodstuff for its cooling, wherein the vacuum chamber is closeable by a sliding door (20, 125), wherein the sliding door (20, 125) or the door flange (28) contains a seal (29, 100,127), which enables a fluid tight sealing in the closed state of the sliding door (20, 125) of the vacuum chamber (2) against the surroundings, wherein the sliding door (20, 125) comprises a holding element (30, 130), which contains a carrier (40, 41, 42, 140, 141, 142) and carries a door leaf (31, 126) of the sliding door (20, 125), whereby the carrier is movably supported in a guide rail (43), such that the sliding door (20, 125) is movable substantially in a horizontal direction of displacement for opening or closing the vacuum chamber (2), **characterized in that** the carrier element (40, 41, 42, 140, 141, 142) contains a bolt shaped compensation element (35, 45 , 46, 135), wherein the compensation element (35, 45, 46, 135) is fixedly connected to the door leaf (31, 126) of the sliding door (20, 125) wherein the compensating element (35, 45, 46, 135) extends through a hole in the carrier (40, 41, 42, 140, 141, 142) and, depending on the position of the sliding door (20, 125), protrudes out of the hole over a variable length such that the door leaf (31, 126) of the sliding door (20, 125) is movable by means of the compensation element (35, 45, 46, 135) relative to the holding element (30, 130).

2. The vacuum cooling device according to claim 1, wherein the door leaf (31) of the sliding door rests in the closed state on the door flange (28).

3. The vacuum cooling device according to claim 1 or 2, wherein the seal (29, 100, 127) is configured as a circumferential seal.

4. The vacuum cooling device according to claim 1, wherein the carrier (40, 41, 42, 140, 141, 142) comprises rollers (50, 51, 52, 150) which are movable in the guide rail (43) along a horizontal path.

5. The vacuum cooling device according to any one of the preceding claims, wherein the sliding door (20, 125) comprises an opening and/or closing mechanism (60, 160).

6. The vacuum cooling device according to claim 5, wherein the sliding door (20, 125) is movable by operating the closing mechanism such that the seal (29, 100, 127) comes to rest upon the door flange (28), whereby a sealing effect is obtainable.

7. The vacuum cooling device according to any one of the preceding claims, wherein a first and a second sliding door (20, 120, 125) are provided.

8. The vacuum cooling device according to any one of the preceding claims, wherein the sliding door comprises a reinforcing element (90, 190) and/or a baffle (191).

9. The vacuum cooling device according to any one of the preceding claims 3 to 8, wherein the door leaf (31, 126) rests at least along the seal (29, 100, 127) on the door flange in the closed state.

10. The vacuum cooling device according to claim 9, wherein the seal (29, 100, 127) comprises a compensation element to seal any unevenness in the door leaf (31, 126) and/or the door flange (28).

11. A method for operating the sliding door (20, 125) for a vacuum cooling device (1) comprising the steps: operating the opening and closing mechanism (60, 160), wherein the sliding door is moved for opening or closing substantially in horizontal direction between an open state and a closed state, whereby by operating the closing and opening mechanism (60, 160) for closing of a vacuum chamber (2) of the vacuum cooling device a door leaf (31, 126) of the sliding door (20, 125) is pressed against a door flange (28) in a frame (4), wherein in a second step a seal (29, 100, 127) between the door leaf (31, 126) and door flange (28) is compressed such that the vacuum chamber (2) is closed fluid-tightly such that the seal (29, 100, 127) allows for a slow pressure decrease for gentle vacuum cooling of foodstuff, wherein the sliding door (20, 125) comprises a holding element (30, 130) which contains a carrier (40, 41, 42, 140, 141, 142) and carries a door leaf (31, 126) of the sliding door (20, 125), the carrier being movably supported in a guide rail (43), such that the vacuum chamber (2) can be opened or closed by the sliding door when the sliding door (25, 125) is moved substantially in a horizontal direction of displacement, **characterized in that** the carrier (40, 41, 42, 140, 141, 142) contains a bolt shaped compensation element (35, 45, 46, 135), wherein the compensation element (35, 45, 46, 135) is connected to the door leaf (31, 126) of the sliding door (20, 125) wherein the compensating element (35, 45, 46, 135) extends through a hole in the carrier (40, 41, 42, 140, 141, 142) and, depending on the position of the sliding door (20, 125), protrudes out of the hole over a variable length, such that the door leaf (31, 126) of the sliding door (20, 125) can be moved relative to the holding element (30, 130) by means of the compensation element (35, 45, 46, 135).

12. The method according to claim 11, wherein the sliding door (20, 125) can be opened or closed manually.

13. The method according to one of claims 11 or 12, wherein the sliding door has a drive (55) for its translational movement which can be decoupled from the sliding door to operate the opening and/or closing mechanism (60, 160) of the sliding door (20).

## Revendications

1. Dispositif de refroidissement sous vide (1) pour refroidir des aliments, en particulier des produits de boulangerie chauds, comprenant une chambre à vide (2) qui est conçue pour contenir les aliments pour les refroidir, la chambre à vide (2) pouvant être fermée par une porte coulissante (20, 125), dans lequel la porte coulissante (20, 125) ou la bride de porte (28) contient un joint (29, 100, 127) qui, lorsque la porte coulissante (20, 125) est fermée, fournit un joint étanche aux fluides de la chambre à vide (2) contre l'environnement, la porte coulissante (20, 125) ayant un élément de maintien (30, 130) qui contient un élément porteur (40, 41, 42, 140, 141, 142) et porte un vantail (31, 126) de la porte coulissante (20, 125), en ce que l'élément porteur est monté dans un rail de guidage (43) de manière déplaçable de sorte que la porte coulissante (20, 125) peut être déplacée essentiellement dans une direction de déplacement horizontal pour ouvrir ou fermer la chambre à vide (2), **caractérisée en ce que** l'élément porteur (40, 41, 42, 140, 141, 142) contient un élément compensateur (35, 45, 46, 135) en forme de boulon, **en ce que** l'élément compensateur (35, 45, 46, 135) est connecté de manière rigide avec le vantail (31, 126) de la porte coulissante (20, 125) dans lequel l'élément compensateur (35, 45, 46, 135) traverse un trou dans l'élément porteur (40, 41, 42, 140, 141, 142) et fait saillie hors du trou sur une longueur variable en fonction de la position de la porte coulissante (20, 125), de sorte que le vantail (31, 126) de la porte coulissante (20, 125) peut être déplacé par rapport à l'élément de maintien (30, 130) par l'élément compensateur (35, 45, 46, 135).

2. Dispositif de refroidissement sous vide selon la revendication 1, dans lequel le vantail (31) de la porte coulissante (20, 125) repose sur une bride de porte (28) à l'état fermé.

3. Dispositif de refroidissement sous vide selon la revendication 1 ou 2, dans lequel le joint (29, 100, 127) est conçu comme un joint circonférentiel.

4. Dispositif de refroidissement sous vide selon la revendication 1, dans lequel des éléments roulants (50, 51, 52, 150) sont fixés sur l'élément porteur (40, 41, 42, 140, 141, 142), qui sont mobiles dans le rail de guidage (43) selon un chemin horizontal.

5. Dispositif de refroidissement sous vide selon l'une des revendications précédentes, dans lequel la porte coulissante (20, 125) contient un mécanisme d'ouverture et / ou de fermeture (60, 160).

6. Dispositif de refroidissement sous vide selon la revendication 5, dans lequel la porte coulissante (20, 125) est déplacée en actionnant le mécanisme de fermeture de telle manière que le joint (29, 100, 127) repose sur le rebord de la porte (28) pour produire un effet d'étanchéité.

7. Dispositif de refroidissement sous vide selon l'une des revendications précédentes, en ce qu'une première et une deuxième porte coulissante (20, 120, 125) sont prévues.

8. Dispositif de refroidissement sous vide selon l'une des revendications précédentes, dans lequel la porte coulissante contient un élément de renfort (90, 190) et / ou une entretoise (191).

9. Dispositif de refroidissement sous vide selon l'une des revendications précédentes 3 à 8, dans lequel le vantail (31, 126) repose à l'état fermé au moins le long du joint (29, 100, 127) sur le rebord de porte.

10. Dispositif de refroidissement sous vide selon la revendication 9, dans lequel le joint (29, 100, 127) contient un élément de compensation pour sceller les irrégularités dans le vantail (31, 126) et / ou le rebord de porte (28).

11. Procédé pour actionner une porte coulissante (20, 125) pour un dispositif de refroidissement sous vide (1) comprenant les étapes: actionner un mécanisme d'ouverture et de fermeture (60, 160) pour déplacer la porte coulissante sensiblement dans une direction horizontale entre une position ouverte et une position fermée, en ce qu' un vantail (31, 126) de la porte coulissante (20, 125) est pressé contre un rebord de porte (28) d'une construction de cadre (4) en actionnant le mécanisme d'ouverture et de fermeture (60, 160) pour fermer une chambre à vide (2) du dispositif de refroidissement à vide, dans une deuxième étape, un joint (29, 100, 127) est comprimé entre le vantail (31, 126) et le rebord de porte (28) de telle manière que la chambre à vide (2) est fermée de manière étanche au vide, de sorte que le joint (29, 100, 127) permet une chute de pression lente pour un refroidissement sous vide doux des aliments, en ce que la porte coulissante (20, 125) comprend un élément de maintien (30, 130), qui contient un élément porteur (40, 41, 42, 140, 141, 142) et porte un vantail (31, 126) de la porte coulissante (20, 125), l'élément porteur étant monté coulissant dans un rail de guidage (43), de sorte que la chambre à vide (2) peut être ouverte ou fermée par la porte coulissante si la porte coulissante (25, 125) est déplacée essentiellement dans un sens horizontal du déplacement, **caractérisée en ce que** l'élément porteur (40, 41, 42, 140, 141, 142) contient un élément compensateur (35, 45, 46, 135) en forme de boulon, **en ce que** l'élément compensateur (35, 45, 46, 135) est connecté avec le vantail (31, 126) de la porte coulissante (20, 125) die manière rigide, dans lequel l'élément compensateur (35, 45, 46, 135) traverse un trou dans l'élément porteur (40, 41, 42, 140, 141, 142) et fait saillie hors du trou sur une longueur variable en fonction de la position de la porte coulissante (20, 125) de telle sorte que le vantail (31, 126) de la porte coulissante (20, 125) peut être déplacé par rapport à l'élément de maintien (30, 130) par l'élément compensateur (35, 45, 46, 135).

12. Procédé selon la revendication 11, dans lequel la porte coulissante (20, 125) peut être ouverte ou fermée à la main.

13. Procédé selon l'une quelconque des revendications 11 ou 12, dans lequel la porte coulissante (20, 125) comprend un entraînement (55) pour son déplacement, qui peut être découplé de la porte coulissante pour actionner le mécanisme d'ouverture et / ou de fermeture (60, 160) de la porte coulissante (20, 125).
